(19) Europäisches Patentamt
European Patent Office
Office européen des brevets

(11) **EP 3 680 397 B1**

(12) **EUROPEAN PATENT SPECIFICATION**

(45) Date of publication and mention
of the grant of the patent:
**09.08.2023 Bulletin 2023/32**

(21) Application number: **17923987.6**

(22) Date of filing: **07.09.2017**

(51) International Patent Classification (IPC):
*E02F 9/26* (2006.01)     *E02F 9/22* (2006.01)
*H04N 7/18* (2006.01)     *E02F 3/43* (2006.01)

(52) Cooperative Patent Classification (CPC):
**E02F 3/435; E02F 9/261; H04N 7/183;** E02F 9/2296

(86) International application number:
**PCT/JP2017/032372**

(87) International publication number:
**WO 2019/049288 (14.03.2019 Gazette 2019/11)**

(54) **CONSTRUCTION MACHINERY**

BAUMASCHINEN

MACHINE DE CONSTRUCTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.07.2020 Bulletin 2020/29**

(73) Proprietor: **Hitachi Construction Machinery Co.,
Ltd.
Taito-ku
Tokyo 110-0015 (JP)**

(72) Inventors:
• **SAKAMOTO, Hiroshi**
**Tsuchiura-shi, Ibaraki, 3000013 (JP)**
• **KUROKAMI, Kazushige**
**Tsuchiura-shi, Ibaraki, 3000013 (JP)**
• **TORIYAMA, Youhei**
**Tsuchiura-shi, Ibaraki, 3000013 (JP)**
• **MIZUOCHI, Mariko**
**Tokyo, 1008280 (JP)**

(74) Representative: **MERH-IP Matias Erny Reichl
Hoffmann
Patentanwälte PartG mbB
Paul-Heyse-Strasse 29
80336 München (DE)**

(56) References cited:
WO-A1-2016/174953     WO-A1-2017/094626
WO-A1-2017/110382     JP-A- 2001 123 476
JP-A- 2002 339 407     JP-A- 2003 034 206
JP-A- 2014 205 955     JP-A- 2015 190 159
JP-A- 2017 115 488     US-A1- 2013 222 573
US-A1- 2017 175 364

**Description**

Technical Field

The present invention relates to a construction machine.

Background Art

In recent years, construction sites have been increasingly information oriented. There has been put to practical use a guidance apparatus for assisting the operator of a work implement mounted on a construction machine in operating the work implement by presenting the operator with three-dimensional data, hereinafter referred to as "design data," that have been produced from design drawings by an external system specializing in construction management and also with positional information about the work implement.

For example, a hydraulic excavator having a work implement where a boom, an arm, and a bucket are angularly movable coupled together performs excavation works including a process of excavating a slope face and a process of horizontally leveling a land surface. Since the boom, the arm, and the bucket follow respective arcuate trajectories, the operator needs to be skilled enough to perform composite operations to control the work implement to enable the bucket to move straight.

As a technology for assisting in operator's operations, there is disclosed in Patent Document 1, for example, a guidance apparatus for assisting the operator in operating a work implement including a boom, an arm, and a bucket to excavate a target excavation surface that has been preset based on design data, by displaying an image of the positional relationship between the target excavation surface and the tip end of the bucket on a monitor in the cabin for increased working efficiency.

Technological development efforts have also been underway for assisting in safety operation at construction sites. For example, Patent Document 2 reveals a civil engineering operation system for restraining damage to obstacles such as buried structures, superstructures, etc. to assist in safety operation by producing a civil engineering operation map using a stored database of buried structures, superstructures, etc., detecting the position, direction, and so on of a construction machine, and displaying an image of the detected data together with the civil engineering operation map on a display screen.

Patent Document 3 discloses a technology for assisting the operator of a construction machine such as a hydraulic excavator or the like having a swing structure, in performing safety operation by detecting an intrusive object into a predetermined area with a total of three intrusive object sensors located rearwardly, leftwardly, and rightwardly of an upper swing structure and presenting the operator with information through a warning device such as a lamp or the like. Furthermore, Patent Document 4 discloses a work machine, wherein the position information of a cutting edge of a bucket is superimposed and displayed on the actual scene of a work site. Patent Document 5 discloses an information display, wherein the target surface, the current ground form, and the design ground form are displayed in an overlapping fashion. Patent Document 6 discloses work machine, wherein the target design ground form is superimposed on the actual scene of the work site. Patent Document 7 discloses a monitoring system for a work machine, wherein that the person detected in the image captured by the camera is highlighted. Eventually, Patent Document 8 also discloses a monitoring system for a work machine, wherein an obstacle, and a detailed information or an ancillary information of the obstacle are displayed superimposed on a camera image.

Prior Art Document

Patent Documents

Patent Document 1: JP-2001-123476-A
Patent Document 2: JP-2002-339407-A
Patent Document 3: JP-2015-190159-A
Patent Document 4: JP 2017-115488 A
Patent Document 5: US 2017/175364 A1
Patent Document 6: WO 2017/110382 A1
Patent Document 7: WO 2017/094626 A1
Patent Document 8: US 2013/222573 A1

Summary of the Invention

Problem to be Solved by the Invention

As described above in the conventional art, the construction machines handle diverse information for assisting the operator for the purposes of increasing work efficiency and convenience.

However, use of the guidance apparatus described in Patent Document 1 necessitates the operator to keep an eye on a screen of the guidance apparatus during a process of excavating a slope face, a process of horizontally leveling a land surface, or the like. Consequently, the operator is highly likely to be late in responding to information presented from the intrusive object sensors disclosed in Patent Document 3. Although the civil engineering operation system described in Patent Document 2 makes it possible for the operator to deal quickly with obstacles such as buried structures, superstructures, or the like whose data have been stored in the database as information of the map is presented to the operator for guidance, the operator is liable to be late in responding to information presented from the intrusive object sensors disclosed in Patent Document 3, resulting in difficulty making work efficiency and convenience compatible with each other.

The present invention has been made in view of the foregoing situation. It is an object of the present invention to provide a construction machine which is capable of reliably presenting the operator with highly real-time information about obstacles such as intrusive objects around the machine body of the construction machine even when the operator is keeping an eye on the screen of a guidance apparatus, thereby making work efficiency and convenience compatible with each other.

Means for Solving the Problem

The present application includes a plurality of means for solving the above problems. According to one example, there is provided a construction machine including: an articulated work implement having a plurality of driven members that are coupled together; a plurality of hydraulic actuators for actuating the driven members; and a plurality of operation lever devices disposed in a cabin occupied by an operator for instructing the hydraulic actuators to operate to respective extents depending on operation amounts by which the operation lever devices are operated, the construction machine further including: a guidance apparatus having a design data acquisition section that acquires predetermined design data about an object to be worked on by the work implement, a work implement position acquisition section 412 that acquires positional information of the work implement, a target surface setting section that sets a target surface for the object to be worked on by the work implement based on the design data acquired by the design data acquisition section and the positional information of the work implement acquired by the work implement position acquisition section, and a guidance display section that displays the target surface set by the target surface setting section and the positional information of the work implement acquired by the work implement position acquisition section on a guidance monitor in the cabin; and an obstacle detecting apparatus having an obstacle sensor that detects an obstacle around the construction machine, and an obstacle position acquisition section that acquires the positional information of the obstacle detected by the obstacle sensor. The guidance display section of the guidance apparatus displays the positional information of the obstacle acquired by the obstacle position acquisition section of the obstacle detecting apparatus together with the target surface and the positional information of the work implement on the same screen of the guidance monitor.

Advantages of the Invention

According to the present invention, even while the operator is keeping an eye on the screen of the guidance apparatus, it is possible to present the operator reliably with highly real-time information about the obstacle, such as an intrusive object around the machine body, making work efficiency and convenience compatible with each other.

Brief Description of the Drawings

FIG. 1 is a diagram illustrating a hydraulic drive system of a hydraulic excavator, shown as an example of construction machine, together with a control unit therefor.
FIG. 2 is a view schematically illustrating the appearance of the hydraulic excavator.
FIG. 3 is a hardware makeup diagram illustrating a guidance apparatus and an obstacle detecting apparatus together with a peripheral structure.
FIG. 4A is a functional block diagram illustrating the guidance apparatus and the obstacle detecting apparatus together with the peripheral structure.

FIG. 4B is a flowchart of a processing sequence of a guidance display section.

FIG. 5A is a view schematically illustrating an example of image displayed on a display screen of the guidance apparatus when there is no obstacle, the image representing the hydraulic excavator in sectional side elevation.

FIG. 5B is a view schematically illustrating an example of image displayed on the display screen of the guidance apparatus when there is no obstacle, the image representing the hydraulic excavator in perspective.

FIG. 6 is a view illustrating the manner in which the construction machine detects a worker as an obstacle on the right side of the construction machine by communicating with an IC tag or the like worn by the worker.

FIG. 7 is a view schematically illustrating an example of image displayed on the display screen in the obstacle detecting apparatus.

FIG. 8A is a view schematically illustrating an example of image displayed on the display screen of the guidance apparatus when there is an obstacle, the image representing the construction machine in sectional side elevation.

FIG. 8B is a view schematically illustrating another example of image displayed on the display screen of the guidance apparatus when there is an obstacle, the image representing the construction machine in perspective.

FIG. 9 is a view schematically illustrating another example of image displayed on the display screen of the guidance apparatus when there is an obstacle, the image representing the construction machine in sectional side elevation.

Modes for Carrying Out the Invention

An embodiment of the present invention will hereinafter be described in detail with reference to the drawings.

A hydraulic excavator having a bucket (1c) mounted as an attachment on the tip end of a work implement will hereinafter be described by way of example. However, the present invention is also applicable to a construction machine such as a hydraulic excavator having an attachment other than a bucket insofar as the construction machine includes a guidance apparatus for assisting the operator with an image, displayed on a monitor (display device) in a cabin, representing the positional relationship between a target excavation surface (target surface) and the attachment.

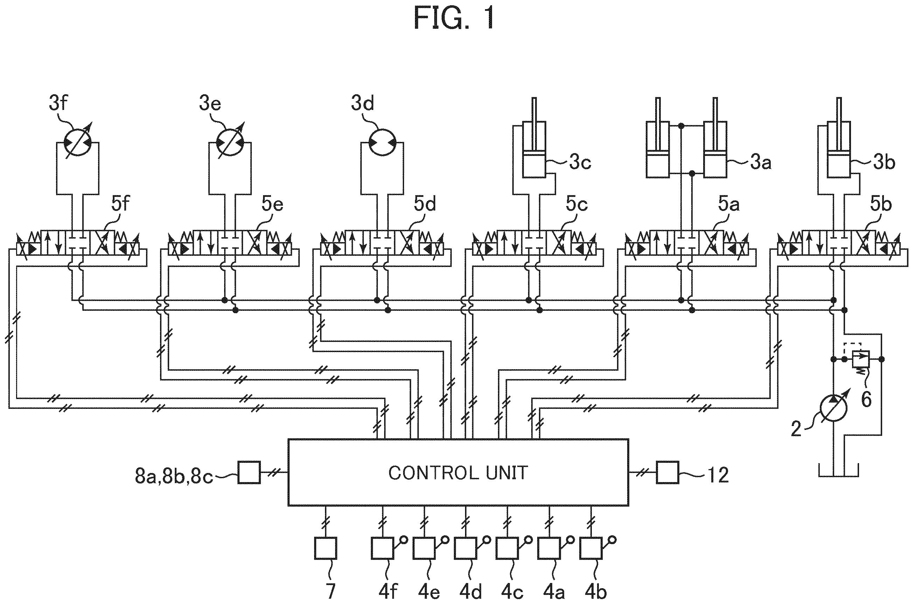

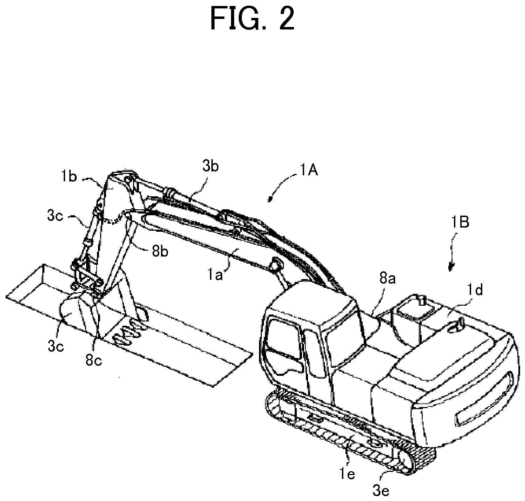

FIG. 1 is a diagram illustrating a hydraulic drive system of a hydraulic excavator, shown as an example of construction machine, together with a control unit therefor according to an embodiment of the present invention. FIG. 2 is a view schematically illustrating the appearance of the hydraulic excavator.

As illustrated in FIG. 1, the hydraulic excavator according to the present embodiment has a hydraulic pump 2, a plurality of hydraulic actuators including a boom cylinder 3a, an arm cylinder 3b, a bucket cylinder 3c, a swing motor 3d, and left and right track motors 3e, 3f, a plurality of operation lever devices 4a through 4f for controlling the respective hydraulic actuators 3a through 3f actuated by the hydraulic fluid from the hydraulic pump 2 , a plurality of flow control valves 5a through 5f controlled respectively by the operation lever devices 4a through 4f for controlling the rates of flow of a hydraulic fluid supplied to the hydraulic actuators 3a through 3f, a relief valve 6 that opens when the pressure of the hydraulic fluid delivered from the hydraulic pump 2 is equal to or more than a setting value, and a control unit 9 for controlling the flow control valves 5a through 5f in response to operation signals sent thereto from the operation lever devices 4a through 4f. These components of the hydraulic excavator jointly make up a hydraulic drive system for actuating driven components of the hydraulic excavator.

According to the present embodiment, the operation lever devices 4a through 4f are electric lever devices for outputting electric signals as operation signals, and the flow control valves 5a through 5f are electrohydraulic converters for converting electric signals into hydraulic pilot pressures, e.g., electrohydraulic valves each including solenoid proportional valves on its both ends. The control unit 9 generates flow control valve drive signals in response to operation signals from the operation lever devices 4a through 4f, and drives and controls the flow control valves 5a through 5f with the generated flow control valve drive signals.

As illustrated in FIG. 2, the hydraulic excavator includes a machine body or construction machine main body 1B having an upper swing structure 1d and a lower track structure 1e, and an articulated work implement 1A having a boom 1a, an arm 1b, and a bucket 1c each angularly movable in vertical directions and mounted on a front portion of the upper swing structure 1d. The boom 1a of the work implement 1A has a proximal end supported on the front portion of the upper swing structure 1d.

The boom 1a, the arm 1b, the bucket 1c, the upper swing structure 1d, and the lower track structure 1e of FIG. 2 are actuated respectively by the boom cylinder 3a, the arm cylinder 3b, the bucket cylinder 3c, the swing motor 3d, and the left and right track motors 3e, 3f, illustrated in FIG. 1 and are instructed to operate by the respective operation lever devices 4a through 4f.

The boom 1a, the arm 1b, and the bucket 1c of the work implement 1A are angularly movable about respective pivot points that are associated with respective angle sensors 8a, 8b, 8c as posture sensors for detecting respective angles or angular displacements of the boom 1a, the arm 1b, and the bucket 1c. The angular displacements of the boom 1a, the arm 1b, and the bucket 1c represent state quantities with respect to the position and posture of the work implement 1A. For the sake of brevity, the angle sensors 8a, 8b, 8c may hereinafter be collectively referred to as "posture sensors 8."

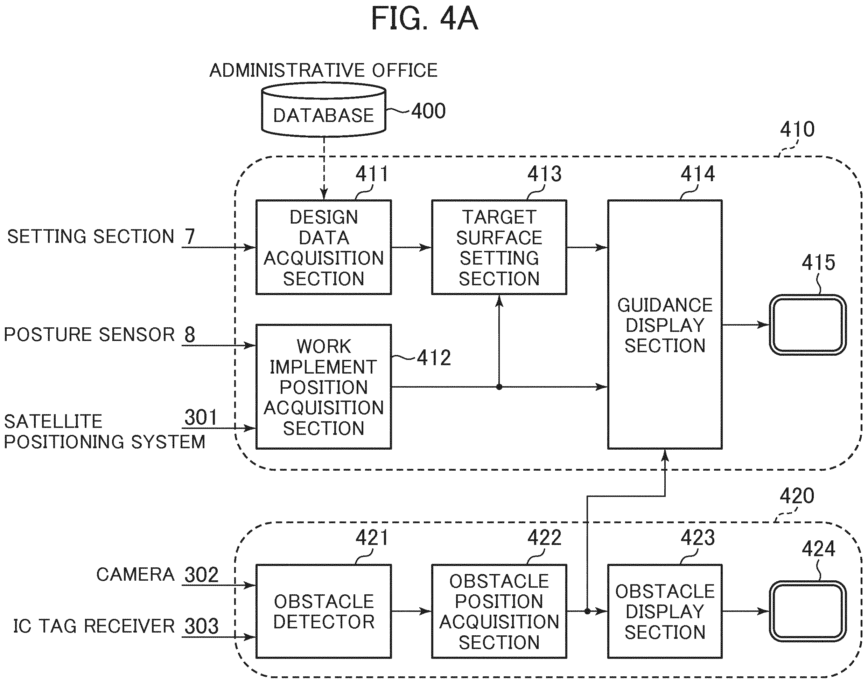

The hydraulic excavator that is constructed as described above incorporates a guidance apparatus 410 and an obstacle detecting apparatus 420 (see FIG. 4A) according to the present embodiment. The guidance apparatus 410 serves to assist the operator in operating the hydraulic excavator by presenting the operator with a target surface based on design data and positional information of the work implement 1A. The obstacle detecting apparatus 420 detects in real time obstacles and intrusive objects around the machine body of the construction machine and indicates the detected obstacles and intrusive objects to the operator, if necessary.

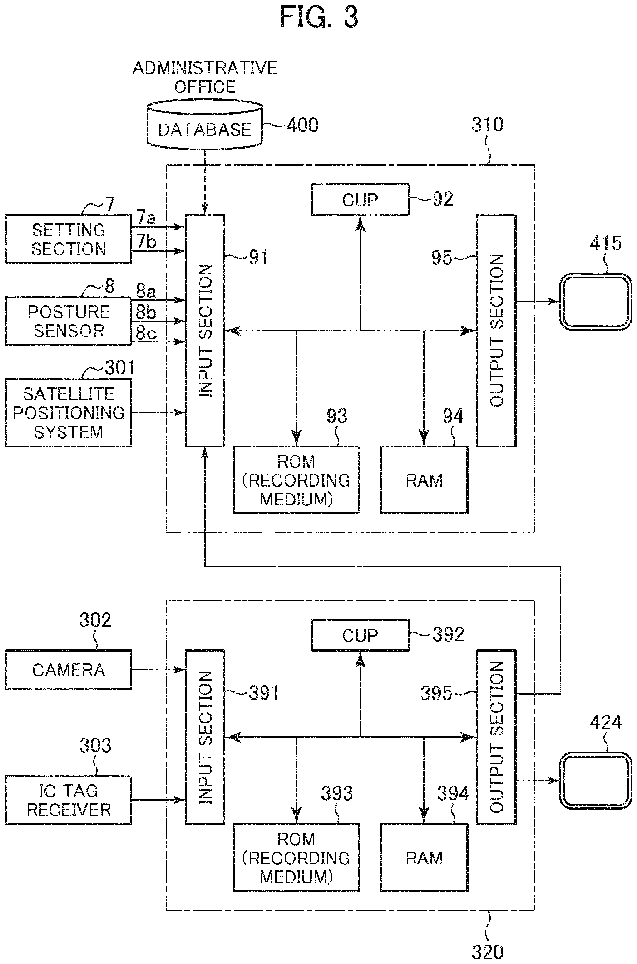

FIG. 3 is a hardware makeup diagram illustrating the guidance apparatus and the obstacle detecting apparatus together with the peripheral structure according to the present embodiment.

As illustrated in FIG. 3, the hydraulic excavator according to the present embodiment includes a setting section 7 for acquiring design data from a database 400 in an administrative office, the posture sensors 8 disposed respectively at the pivot points about which the boom 1a, the arm 1b, and the bucket 1c are angularly movable, for detecting respective angular displacements of the boom 1a, the arm 1b, and the bucket 1c which represent state quantities with respect to the position and posture of the work implement 1A, a satellite positioning system 301 for measuring the position of the machine body of the hydraulic excavator on a global basis, using a GPS (Global Positioning System), a GNSS (Global Navigation Satellite System), or the like, and a control unit 310, such as a microcomputer, for example, for performing a display process on a guidance monitor 415 installed in the cabin of the hydraulic excavator in response to input signals from the setting section 7, the posture sensors 8, and the satellite positioning system 301.

The control unit 310 has an input section 91, a central processing unit (CPU) 92 as a processor, a read only memory (ROM) 93 and a random access memory (RAM) 94 as storage devices, and an output section 95. The input section 91 receives an indication signal from the setting section 7, angle signals sent from the posture sensors 8, i.e., the angle sensors 8a, 8b, and 8c, and a positional signal from the satellite positioning system 301, and performs an A/D conversion process on the received signals to convert them into digital signals. The ROM 93 is a recording medium storing control programs therein. The CPU 92 performs a predetermined processing process on signals from the input section 91, the ROM 93, and the RAM 94 according to the control programs stored in the ROM 93. The output section 95 generates signals according to the results of the processing process performed by the CPU 92, and outputs the generated signals to the guidance monitor 415, which displays on the screen of the guidance monitor 415 images of the bucket 1c, the target surface, and so on. The control unit 310 includes semiconductor memories in the form of the ROM 93 and the RAM 94 as storage devices. However, the control unit 310 may alternatively include a magnetic storage device such as a hard disk drive or the like with control programs stored therein.

The hydraulic excavator according to the present embodiment also includes a camera 302 for capturing an image of the periphery of the machine body to detect obstacles, an IC tag receiver 303 for detecting information of IC tags worn by workers around the machine body, and a control unit 320, such as a microcomputer, for example, for performing a display process on an obstacle detection monitor 424 installed in the cabin of the hydraulic excavator in response to input signals from the camera 302 and the IC tag receiver 303.

The control unit 320 has an input section 391, a central processing unit (CPU) 392 as a processor, a read only memory (ROM) 393 and a random access memory (RAM) 394 as storage devices, and an output section 395. The input section 391 receives a video signal from the camera 302 and a reception signal from the IC tag receiver 303, and performs an A/D conversion process on the received signals to convert them into digital signals. The ROM 393 is a recording medium storing control programs therein. The CPU 392 performs a predetermined processing process on signals sent from the input section 391, the ROM 393, and the RAM 394 according to the control programs stored in the ROM 393. The output section 395 generates signals according to the results of the processing process performed by the CPU 392, and outputs the generated signals to the obstacle detection monitor 424, which displays on the screen of the obstacle detection monitor 424 images of positional information of detected obstacles. The output section 395 also outputs the positional information of detected obstacles to the control unit 310, and shares the positional information with the control unit 310. The control unit 320 includes semiconductor memories in the form of the ROM 393 and the RAM 394 as storage devices. However, the control unit 320 may alternatively include a magnetic storage device such as a hard disk drive or the like with control programs stored therein.

FIG. 4A is a functional block diagram illustrating the guidance apparatus and the obstacle detecting apparatus together with the peripheral structure according to the present embodiment.

The guidance apparatus 410 has a design data acquisition section 411, a work implement position acquisition section 412, a target surface setting section 413, a guidance display section 414, and a guidance monitor 415. Except the guidance monitor 415, these functional sections of the guidance apparatus 410 are implemented by control programs executed by the control unit 310.

The design data acquisition section 411 acquires design data for a construction site from the database 400 in the administrative office, which contains construction drawings, etc. through a communication means such as a wireless LAN (Local Area Network). The design data can be acquired from the database 400 by the operator who operates the setting section 7, which may include switches, etc., in the cabin. The design data can alternatively be acquired from a recording medium such as a USB memory or the like. The setting section 7 includes switches mounted on the grips of the operation lever devices 4a through 4f or an operation device similar thereto. The setting section 7 includes a switch 7a for acquiring design data and a switch 7b for clearing acquired design data. When the switch 7a is pressed, the design data acquisition section 411 downloads certain design data from the database 400 in the administrative office through the communication means such as a wireless LAN (Local Area Network), and stores the downloaded design data in the control unit 310. The design data acquisition section 411 also converts the stored design data into data in a predetermined format, e.g., point-group data in a global coordinate system, and outputs information of the converted data to the target surface setting section 413. When the switch 7b is pressed, the design data acquisition section 411 clears the stored design data.

The work implement position acquisition section 412 receives angle signals from the posture sensors 8, i.e., the angle sensors 8a, 8b, and 8c, that measure the angles of the arm 1a, the boom 1b, and the bucket 1c at their pivot points, and calculates the position of the bucket 1c in a machine-body coordinate system, whose origin is positioned at the pivot point of the boom 1a, for example, using the received angular information and the dimensions of the construction machine including the work implement 1A and the machine body 1B. If the satellite positioning system 301, such as a GPS (Global Positioning System), a GNSS (Global Navigation Satellite System), or the like, is installed on the machine body 1B, then the work implement position acquisition section 412 may express the position of the bucket 1c in a global coordinate system using the positional information from the satellite positioning system 301. For example, the work implement position acquisition section 412 converts the position of the bucket 1c from the machine-body coordinate system into a position in the global coordinate system, using the position signal entered from the satellite positioning system 301, the dimensions of the construction machine, and the information about the installed position of the satellite positioning system 301. The work implement position acquisition section 412 outputs the positional information of the bucket 1c to the target surface setting section 413 and the guidance display section 414.

The target surface setting section 413 sets a target surface from the design data acquired by the design data acquisition section 411 based on the position of the bucket 1c acquired by the work implement position acquisition section 412. For example, the target surface setting section 413 receives the design data output from the design data acquisition section 411 and the position of the bucket 1c output from the work implement position acquisition section 412, sets a target surface by extracting design data within a predetermined range around the position of the bucket 1c, and outputs information about the set target surface to the guidance display section 314.

The guidance display section 414 performs a process for displaying the target surface set by the target surface setting section 413 and the positional information of the bucket 1c acquired by the work implement position acquisition section 412 on the guidance monitor 415 in the cabin. For example, the guidance display section 414 generates image information representing the positional relationship between the position of the bucket 1c output from the work implement position acquisition section 412 and the target surface output from the target surface setting section 413, and displays an image based on the image information on the screen of the guidance monitor 415.

The guidance apparatus 410 that includes the design data acquisition section 411, the work implement position acquisition section 412, the target surface setting section 413, the guidance display section 414, and the guidance monitor 415 in the cabin is thus able to assist the operator in operating the hydraulic excavator by presenting the target surface based on the design data and the positional information of the work implement.

The obstacle detecting apparatus 420 has an obstacle sensor 421, an obstacle position acquisition section 422, and an obstacle display section 423, and an obstacle detection monitor 424. Except the obstacle detection monitor 424, these functional sections of the obstacle detecting apparatus 420 are implemented by control programs executed by the control unit 320.

The obstacle sensor 421 detects obstacles and intrusive objects around the construction machine by processing the information of an image captured by the camera 302 that is installed on the machine body 1B. If the obstacle sensor 421 can receive information of IC tags worn by workers at the construction site, then the obstacle sensor 421 can detect workers who enter the periphery of the construction machine using the received information.

The obstacle position acquisition section 422 acquires the positions of obstacles based on the information of the obstacles detected by the obstacle sensor 421. For example, the obstacle position acquisition section 422 calculates positional information, in a coordinate system whose origin is located at the camera 302, about obstacles and intrusive objects detected by the processing of the captured image information referred to above, depending on the sizes of those obstacles and intrusive objects, and converts the calculated positional information into positional information in the machine-body coordinate system based on the dimensions of the construction machine and the installed position of the camera 302. As with the work implement position acquisition section 412, the obstacle position acquisition section 422 may express the positions of obstacles and intrusive objects in the global coordinate system if it can use information from the satellite positioning system 301 for measuring the position of the construction machine on the global basis. If workers who enter the periphery of the construction machine are detected based on received information of IC tags worn by the workers, then the obstacle position acquisition section 422 calculates positional information of the workers based on the intensity of radio waves from the IC tags that are received by the IC tag receiver 303 and the installed position of the IC tag receiver 303. The obstacle position acquisition section 422 also outputs the positional information of obstacles, intrusive objects, and workers around the construction machine to the obstacle display section 423 and the guidance display section 414. The obstacle display section 423 displays the positional information of obstacles acquired by the obstacle position acquisition section 422 on the obstacle detection monitor 424 in the cabin. For example, the obstacle display section 423 performs a process for generating image information in the periphery of the construction machine where the positions of the obstacles output from the obstacle position acquisition section 422 are marked, and displaying the generated image information on the screen of the obstacle detection monitor 424.

The obstacle detecting apparatus 420 that includes the obstacle sensor 421 which uses information from the camera and the IC tag and the obstacle position acquisition section 422 which acquires the positions of detected obstacles is thus able to detect in real time obstacles and intrusive objects in the periphery of the construction machine.

The guidance display section 414 receives the positional information of obstacles acquired by the obstacle position acquisition section 422 and displays the received positional information on the guidance monitor 415 in the cabin. If the positions of obstacles acquired by the obstacle position acquisition section 422 are included in or in the vicinity of the target surface set by the target surface setting section 413, then the guidance display section 414 also changes a display method for a target surface on the guidance monitor 415 in the cabin. Details of the display method will be described later.

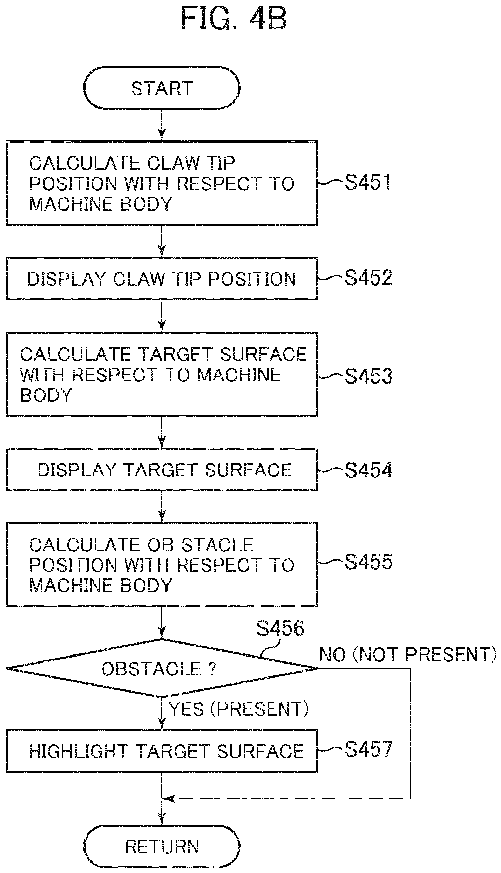

FIG. 4B is a flowchart of a processing sequence of the guidance display section.

By way of example, the processing sequence illustrated in FIG. 4B refers to a process in which the position of an obstacle acquired by the obstacle position acquisition section 422 is included in the target surface set by the target surface setting section 413.

As illustrated in FIG. 4B, the guidance display section 414 reads the position of the bucket 1c acquired by the work implement position acquisition section 412, and if the position of the bucket 1c has not been expressed in the machine-body coordinate system, then the guidance display section 414 converts the position of the bucket 1c into a position in the machine-body coordinate system (step S451). Then, the guidance display section 414 displays the position of the bucket 1c on the guidance monitor 415 based on the converted position of the bucket 1c in the machine-body coordinate system (step S452). Then, the guidance display section 414 reads the target surface acquired by the target surface setting section 413, and if the target surface is not expressed in the machine-body coordinate system, then the guidance display section 414 converts the target surface into a target surface in the machine-body coordinate system as with step S451 (step S453). Then, the guidance display section 414 displays the target surface on the guidance monitor 415 based on the converted target surface in the machine-body coordinate system (step S454). Then, the guidance display section 414 reads the position of an obstacle acquired by the obstacle position acquisition section 422, and if the position of the obstacle is not expressed in the machine-body coordinate system, then the guidance display section 414 converts the position of the obstacle into a position in the machine-body coordinate system as with steps S451, S453 (step S455).

Then, in the machine-body coordinate system, the guidance display section 414 compares the target surface converted in step S453 and the position of the obstacle converted in step S455 with each other, and determines whether the position of the obstacle lies in the target surface or not, i.e., whether the position of the obstacle is included in the target surface or not, (step S456).

According to the determining process in step S456, for example, the target surface is represented by three points (O, A, B) and the position of the obstacle by a point P, and a range where point P is present according to the following equation (1) is considered:

$$\text{Vector OP} = \text{coefficient } s \times \text{vector OA} + \text{coefficient } t \times \text{vector OB} \qquad \cdots (1)$$

If the coefficients s, t in the above equation (1) satisfy the conditions "coefficient s + coefficient t $\geq$ 1," "coefficient s $\geq$ 0," and "coefficient t $\geq$ 0," then the point P is present within a triangle OAB inclusive of its periphery. Providing the three points (O, A, B) representing the target surface and the position P of the obstacle are projected into a plane parallel to the machine body 1B that extends through the origin of the machine-body coordinate system, and the range where the point P is present according to the above equation (1) is applied to the projected plane, i.e., a so-called xy plane, it is possible to determine whether the position of the obstacle is included in the target surface or not.

If the determined result from step S456 is YES, i.e., if it is determined that the position of the obstacle is included in the target surface, i.e., the obstacle is present, then the target surface is highlighted in display (step S457), and control goes back to step S451. The target surface may be highlighted by filling the triangle OAB indicating the target surface or displaying line segments OA, OB, and AB in bold. Details of these display methods will be described later. If the determined result from step S456 is NO, i.e., if it is determined that the position of the obstacle is not included in the target surface, i.e., the obstacle is not present, then control goes back to step S451.

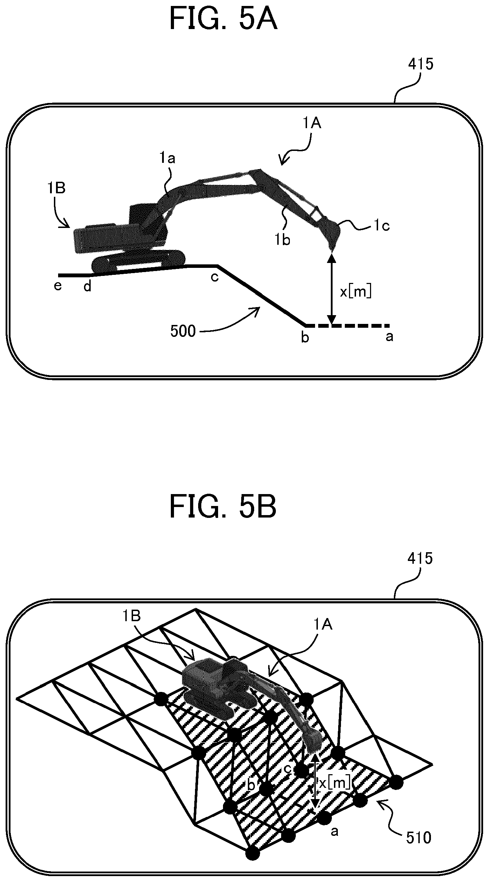

FIGS. 5A and 5B are views schematically illustrating examples of images displayed on the display screen of the guidance apparatus when there is no obstacle. FIG. 5A illustrates an example of displayed image that represents the hydraulic excavator in sectional side elevation, and FIG. 5B illustrates an example of displayed image that represents the hydraulic excavator in perspective.

In FIG. 5A, design data 500, including line segments ab, bc, cd, and de, acquired by the design data acquisition section 411, and the work implement 1A including the bucket 1c based on the information of the positions of the boom 1a, the arm 1b, and the bucket 1c acquired by the work implement position acquisition section 412 and the position of the construction machine, are displayed on the screen of the guidance monitor 415. As indicated by the broken line in FIG. 5A, the line segment ab of the design data 500 is set by the target surface setting section 413 as a target surface close to the bucket 1c based on the positional information of the bucket 1c. Furthermore, the distance, e.g., x [m], between the bucket 1c and the target surface ab is displayed. The displayed design data and work instrument allows the operator to grasp on the screen the positional relationship between the target surface to be excavated and the bucket 1c.

In FIG. 5B, design data 510 (shown hatched) acquired by the design data acquisition section 411, and the work implement 1A including the bucket 1c based on the positions of the boom 1a, the arm 1b, and the bucket 1c acquired by the work implement position acquisition section 412 and the position of the construction machine, are displayed in perspective on the screen of the guidance monitor 415. As indicated by the broken lines in FIG. 5B, an area surrounded by the line segments ab, bc, and ca is set by the target surface setting section 413 as a target surface close to the bucket 1c based on the positional information of the bucket 1c. Furthermore, the distance, e.g., x [m], between the bucket 1c and a target surface abc is displayed. The displayed design data and work instrument allows the operator to grasp on the screen the positional relationship between the target surface to be excavated and the bucket 1c while viewing perspectively the position of the hydraulic excavator as a construction machine.

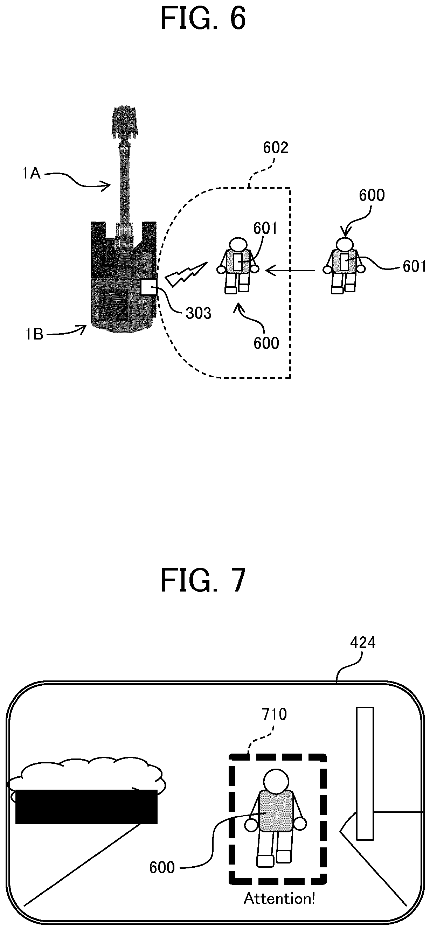

FIG. 6 is a view illustrating the manner in which the construction machine detects a worker as an obstacle on the right side of the construction machine by communicating with an IC tag or the like worn by the worker.

In FIG. 6, the IC tag receiver 303 is installed to have its detection range on the right side of the construction machine. The IC tag receiver 303 includes a magnetic field generator that generates a constant magnetic field 602 in the vicinity of the construction machine, i.e., in a certain range on the right side of the construction machine. When a worker 600 wearing an IC tag 601 enters the range of the magnetic field 602, the IC tag 601 reacts to the magnetic field 602 and sends detection information, i.e., information that it has detected the magnetic field 602 and information inherent in the magnetic field 602, to the IC tag receiver 303 via a communication means such as a wireless means. The IC tag receiver 303 then outputs the detection information received from the IC tag 601 to the control unit 320. The control unit 320 calculates positional information of the obstacle according to the function of the obstacle position acquisition section 422 of the obstacle detecting apparatus 420 (in this case, the positional information of the obstacle represents the right side of the construction machine). The positional information of the obstacle may be calculated, for example, by estimating the distance between the IC tag receiver 303 and the IC tag 601 from the intensity of the radio wave included in the input signal from the IC tag receiver 303, and referring to design information of the construction machine in view of the position where the IC tag receiver 303 is installed on the construction machine and the dimensions of the machine body 1B. The control unit 320 outputs the calculated positional information of the obstacle to the control unit 310. The control unit 310 displays the detected position of the worker, i.e., the positional information of the obstacle, on the guidance monitor 415 based on the positional information of the detected obstacle, according to the function of the guidance display section 414 of the guidance apparatus 410.

FIG. 7 is a view schematically illustrating an example of image displayed on the display screen in the obstacle detecting apparatus.

In FIG. 7, an image in which the worker 600 detected by the obstacle sensor 421 based on the input signals form the camera 302 and the IC tag receiver 303 is marked by a detection frame 710 on the image captured by the camera 302 is displayed on the screen of the obstacle detection monitor 424. These displayed images and an information presenting means such as a warning or the like are combined to enable the operator to react to obstacles and intrusive objects around the construction machine.

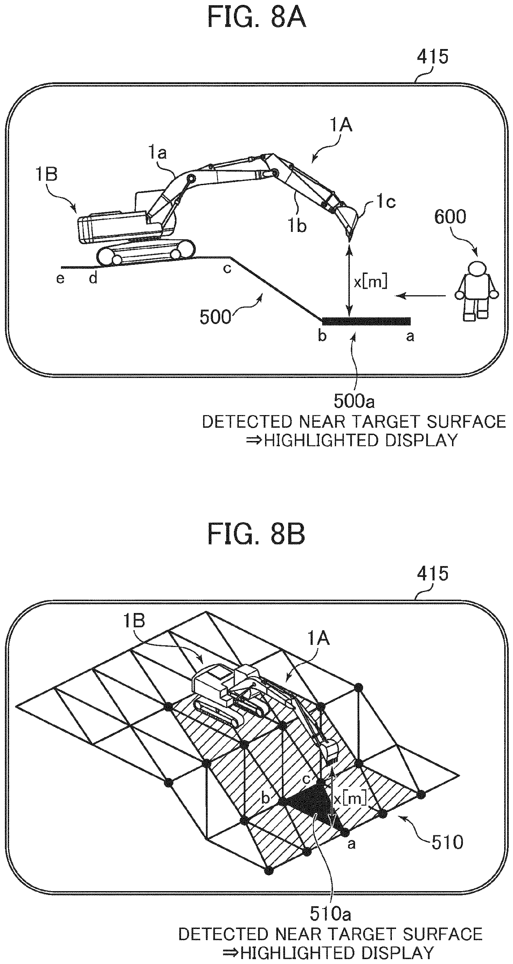

FIGS. 8A and 8B are views schematically illustrating examples of images displayed on the display screen of the guidance apparatus when there is an obstacle. FIG. 8A illustrates an example of displayed image that represents the construction machine in sectional side elevation, and FIG. 8B illustrates an example of displayed image that represents the construction machine in perspective.

FIG. 8A illustrates that the worker 600 is detected as an obstacle near the target surface ab based on input signals from the camera 302 and the IC tag receiver 303. In this case, the guidance display section 414 compares the positional information of the obstacle output from the obstacle position acquisition section 422 and the information of the target surface ab output from the target surface setting section 413 with each other, and changes the display method for the target surface ab to a highlighted display 500a if the position of the obstacle is included in the target surface ab or in the vicinity of the target surface ab. Specifically, the guidance display section 414 performs a display process for changing the display mode by thickening the line of the target surface ab, changing the color of the target surface ab, or making the target surface ab blink, etc., thereby highlighting the target surface ab in display. In FIG. 8A, the line of the target surface ab is thickened by way of example. In FIG. 8A, the display method for the target surface ab is thus changed to the highlighted display 500a to display the detected position of the worker, i.e., the positional information of the obstacle, on the guidance monitor 415 of the guidance apparatus 410. Although the worker 600 is displayed together with an arrow in FIG. 8A to illustrate that the worker 600 is detected as it approaches the target surface ab, it is not necessary to display the worker 600 as an icon or the like on the guidance monitor 415.

FIG. 8B illustrates a scene in which the worker 600 is detected as an obstacle near the target surface abc based on input signals from the camera 302 and the IC tag receiver 303. In this case, the guidance display section 414 compares the positional information of the obstacle output from the obstacle position acquisition section 422 and the information of the target surface ab output from the target surface setting section 413 with each other, and changes the display method for the target surface abc to a highlighted display 500a if the position of the obstacle is included in the target surface abc or in the vicinity of the target surface abc. Specifically, the guidance display section 414 performs a display process for changing the display mode by changing the color of the target surface abc, or making the target surface abc blink, etc., thereby highlighting the target surface abc in display. In FIG. 8B, the color of the target surface abc is changed, i.e., the target surface abc is filled in black. In FIG. 8B, the display method for the target surface abc is thus changed to the highlighted display 500a to display the detected position of the worker, i.e., the positional information of the obstacle, on the guidance monitor 415 of the guidance apparatus 410.

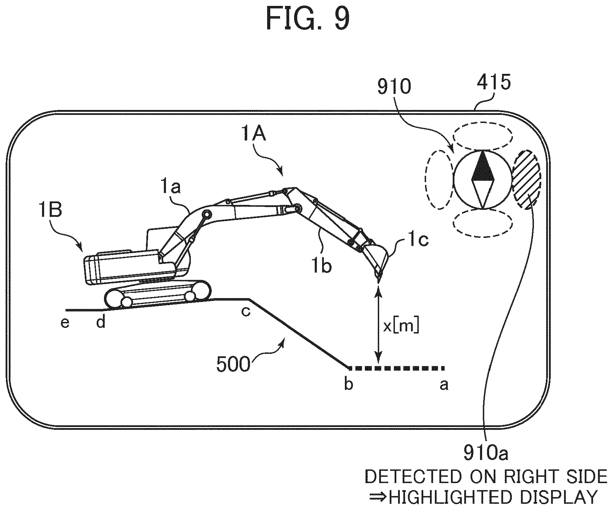

FIG. 9 is a view schematically illustrating another example of image displayed on the display screen of the guidance apparatus when there is an obstacle, the image representing the construction machine in sectional side elevation.

In FIG. 9, an obstacle detection icon 910 is displayed on the display screen of the guidance monitor 415. The obstacle detection icon 910 includes four displayed areas to be signaled around a compass that represents a positively facing direction of the machine body 1B, where it is assumed that the direction in which the work implement 1A faces is positive. Based on the positional information of an obstacle, which represents the right side of the construction machine main body, the guidance display section 414 displays the area on the right side of the obstacle detection icon 910, i.e., an area on the right side of the construction machine main body, in a highlighted display 910a, thereby presenting the operator with the positional information of the obstacle.

The advantages of the present embodiment arranged above will be described below.

In the conventional art, the construction machines handle diverse information for assisting the operator for the purposes of increasing work efficiency and convenience. However, when a guidance apparatus is used, the operator is required to keep an eye on a screen of the guidance apparatus during a process of excavating a face of slope, a process of horizontally leveling a land surface, or the like. Consequently, the operator is highly likely to be late in responding to information presented from intrusive object sensors. Although the conventional art that presents the operator with the information of a map including obstacles for guidance makes it possible for the operator to deal quickly with obstacles such as buried structures, superstructures, or the like whose data have been stored in a database, the operator is still liable to be late in responding to information presented from intrusive object sensors, resulting in difficulty making work efficiency and convenience compatible with each other.

According to the present embodiment, the construction machine has the guidance apparatus 410 including the design data acquisition section 411 that acquires predetermined design data about an object to be worked on by the work implement 1A, the work implement position acquisition section 412 that acquires positional information of the work implement 1A, the target surface setting section 413 that sets a target surface for the object to be worked on by the work implement 1A based on the design data acquired by the design data acquisition section 411 and the positional information of the work implement 1A acquired by the work implement position acquisition section 412, and the guidance display section 414 that displays the target surface set by the target surface setting section 413 and the positional information of the work implement 1A acquired by the work implement position acquisition section 412 on the guidance monitor 415 in the cabin of the construction machine, and the obstacle detecting apparatus 420 including the obstacle sensor 421 that detects an obstacle around the construction machine and the obstacle position acquisition section 422 that acquires the positional information of the obstacle detected by the obstacle sensor 421. The guidance display section 414 of the guidance apparatus 410 displays the positional information of the obstacle acquired by the obstacle position acquisition section 422 of the obstacle detecting apparatus 420 on the guidance monitor 415. Therefore, even while the operator is keeping an eye on the screen of the guidance apparatus, it is possible to present the operator reliably with highly real-time information of the obstacle, such as an intrusive object around the machine body, making work efficiency and convenience compatible with each other.

Specifically, while a construction machine such as a hydraulic excavator or the like is actually performing an excavation work, the operator keeps an eye on the information displayed on the screen of a guidance monitor, and may not keep an eye on the information displayed on an obstacle detection monitor. In addition, the operator is likely to delay in responding to an information presenting means such as a warning or the like due to noise such as engine sounds or vibrations that are produced in the actual operation. According to the present embodiment, the operator keeps an eye on the information displayed on the screen of the guidance monitor 415. Even if the operator does not keep an eye on the information displayed on the screen of the obstacle detection monitor 424, the information of an obstacle or an intrusive object, i.e., the positional information of the obstacle, is displayed on the same screen of the guidance monitor 415, so that the operator is presented reliably with highly real-time information of the obstacle, such as a worker entering the periphery of the machine body, making work efficiency and convenience compatible with each other. In particular, the positional information of the obstacle is more reliably presented to the operator by changing the display method for the target surface that the operator is expected to be most attentive to.

Features of the present embodiment described above will be described below.

(1) In the above embodiment, the construction machine includes the articulated work implement 1A mounted on the construction machine main body, e.g., the machine body 1B, and having a plurality of driven members, e.g., the boom 1a, the arm 1b, and the bucket 1c, that are coupled together, a plurality of hydraulic actuators, e.g., the boom cylinder 3a, the arm cylinder 3b, and the bucket cylinder 3c, for actuating the driven members, and the operation lever devices 4a through 4f disposed in the cabin occupied by an operator for instructing the hydraulic actuators to operate to respective extents depending on operation amounts by which the operation lever devices 4a through 4f are operated, the construction machine having the guidance apparatus 410 including the design data acquisition section 411 that acquires predetermined design data about an object to be worked on by the work implement, the work implement position acquisition section 412 that acquires positional information of the work implement, the target surface setting section 413 that sets a target surface for the object to be worked on by the work implement based on the design data acquired by the design data acquisition section and the positional information of the work implement acquired by the work implement position acquisition section, and the guidance display section 414 that displays the target surface set by the target surface setting section and the positional information of the work implement acquired by the work implement position acquisition section on the guidance monitor 415 in the cabin, and the obstacle detecting apparatus 420 including the obstacle sensor 421 that detects an obstacle around the construction machine and the obstacle position acquisition section 422 that acquires the positional information of the obstacle detected by the obstacle sensor. The guidance display section of the guidance apparatus displays the positional information of the obstacle acquired by the obstacle position acquisition section of the obstacle detecting apparatus on the guidance monitor.

Therefore, even while the operator is keeping an eye on the screen of the guidance apparatus, it is possible to present the operator reliably with highly real-time information of the obstacle, such as an intrusive object around the machine body, making work efficiency and convenience compatible with each other.

(2) According to the above embodiment, in the construction machine of (1), the guidance display section 414 of the guidance apparatus 410 changes a display mode for the target surface to a display mode different from other display modes if the positional information of the obstacle acquired by the obstacle position acquisition section 422 is included in the target surface set by the target surface setting section 413 or in the vicinity of the target surface.

<Additional remarks>

In the above embodiment, a general hydraulic excavator in which hydraulic pumps are actuated by a prime mover such as an engine or the like has been illustrated by way of example. However, the present invention is also applicable to a hybrid hydraulic excavator in which hydraulic pumps are actuated by an engine and electric motors and an electrically operated hydraulic excavator in which hydraulic pumps are actuated by only electric motors, and so on.

The present invention, which is defined in the appended claims, is not limited to the above embodiment, but covers various modifications and combinations without departing from the scope thereof. The present invention is not limited to the construction machine having all the components described in the above embodiment, but may include construction machines having some of those components. The above components, functions, and so on may be partly or wholly implemented by being designed as integrated circuits, for example. Alternatively, the above components, functions, and so on may be software-implemented by a processor that interpret and execute programs representing the functions.

Description of Reference Characters

1A: Work implement

1B: Machine body (construction machine main body)

1a: Boom

1b: Arm

1c: Bucket

1d: Upper swing structure

1e: Lower track structure

2: Hydraulic pump

3a: Boom cylinder

3b: Arm cylinder

3c: Bucket cylinder

3d: Swing motor

3e: Track motor

3f: Track motor

4a to 4f: Operation lever device

5a to 5f: Flow control valve

6: Relief valve

7: Setting section

7a, 7b: Switch

8: Posture sensor

8a to 8c: Angle sensor

9: Control unit

91: Input section

92: Central processing unit (CPU)

93: Read only memory (ROM)

94: Random access memory (RAM)

95: Output section

301: Satellite positioning system

302: Camera

303: Tag receiver

310: Control unit

314: Guidance display section

320: Control unit

391: Input section

392: Central processing unit (CPU)

393: Read only memory (ROM)

394: Random access memory (RAM)

395: Output section

400: Database

410: Guidance apparatus

411: Design data acquisition section

412: Work implement position acquisition section

413: Target surface setting section

414: Guidance display section

415: Guidance monitor

420: Obstacle detecting apparatus

421: Obstacle sensor

422: Obstacle position acquisition section

423: Obstacle display section

424: Obstacle detection monitor

500: Design data

500a, 510a, 910a: Highlighted display

510: Design data

600: Worker

601: IC tag

602: Magnetic field

710: Detection frame

910: Obstacle detection icon

**Claims**

1. A construction machine including:

an articulated work implement (1A) mounted on a construction machine main body (1B) and having a plurality of driven members that are coupled together;

a plurality of hydraulic actuators for actuating the driven members; and

a plurality of operation lever devices disposed in a cabin occupied by an operator for instructing the hydraulic actuators to operate to respective extents depending on operation amounts by which the operation lever devices are operated, the construction machine comprising:

a guidance apparatus (410) including:

a design data acquisition section (411) that acquires predetermined design data about an object to be worked on by the work implement (1A);

a work implement position acquisition section (412) that acquires positional information of the work implement (1A);

a target surface setting section (413) that sets a target surface for the object to be worked on by the work implement (1A) on the basis of the design data acquired by the design data acquisition section (411) and the positional information of the work implement (1A) acquired by the work implement position acquisition section (412); and

a guidance display section (414) that displays the target surface set by the target surface setting section (413) and the positional information of the work implement (1A) acquired by the work implement position acquisition section (412) on a guidance monitor (415) in the cabin;

**characterized in that**:

an obstacle detecting apparatus (420) is including:

an obstacle sensor (421) that detects an obstacle around the construction machine; and

an obstacle position acquisition section (422) that acquires the positional information of the obstacle detected by the obstacle sensor (421),

wherein the guidance display section (414) of the guidance apparatus (410) displays the positional information of the obstacle acquired by the obstacle position acquisition section (422) of the obstacle detecting apparatus (420) together with the target surface and the positional information of the work implement (1A) on the same screen of the guidance monitor (415).

**2.** A construction machine according to claim 1, wherein

the guidance display section (414) of the guidance apparatus (410) changes a display mode for the target surface to a display mode different from other display modes if the positional information of the obstacle acquired by the obstacle position acquisition section (422) is included in the target surface set by the target surface setting section (413) or in the vicinity of the target surface.

**Patentansprüche**

**1.** Baumaschine, die Folgendes enthält:

ein Gelenkarbeitsgerät (1A), das an einen Baumaschinenhauptkörper (1B) montiert ist und mehrere angetriebene Elemente, die aneinander gekoppelt sind, aufweist;

mehrere Hydraulikaktoren zum Betätigen der angetriebenen Elemente; und

mehrere Betätigungshebelvorrichtungen, die in einer Kabine angeordnet sind, die von einem Bediener besetzt ist, um die Hydraulikaktoren anzuweisen, in den jeweiligen Ausmaßen, die von den Betätigungsbeträgen abhängen, mit denen die Betätigungshebelvorrichtungen betätigt werden, zu arbeiten, wobei die Baumaschine Folgendes umfasst:

eine Führungsvorrichtung (410), die Folgendes umfasst:

einen Abschnitt (411) zur Erfassung von Konstruktionsdaten, der vorgegebene Konstruktionsdaten über ein Objekt, an dem mit dem Arbeitsgerät (1A) gearbeitet werden soll, erfasst;

einen Abschnitt (412) zur Erfassung der Arbeitsgeräteposition, der Positionsinformationen des Arbeitsgeräts (1A) erfasst;

einen Abschnitt (413) zur Einstellung der Zieloberfläche, der eine Zieloberfläche für das Objekt, an dem mit dem Arbeitsgerät (1A) gearbeitet werden soll, auf der Grundlage der Konstruktionsdaten, die durch den Abschnitt (411) zur Erfassung von Konstruktionsdaten erfasst worden sind, und der Positionsinformationen des Arbeitsgeräts (1A), die durch den Abschnitt (412) zur Erfassung der Arbeitsgeräteposition erfasst worden sind, einstellt; und

einen Abschnitt (414) zur Anzeige der Führung, der die Zieloberfläche, die durch den Abschnitt (413) zur Einstellung der Zieloberfläche eingestellt worden ist, und die Positionsinformationen des Arbeitsgeräts (1A), die durch den Abschnitt (412) zur Erfassung der Arbeitsgeräteposition erfasst worden sind, auf einem Führungsmonitor (415) in der Kabine anzeigt;

**dadurch gekennzeichnet, dass**:

eine Hindernisdetektionsvorrichtung (420) Folgendes enthält:

einen Hindernissensor (421), der ein Hindernis um die Baumaschine detektiert; und

einen Abschnitt (422) zur Erfassung der Hindernisposition, der die Positionsinformationen des Hindernisses, das von dem Hindernissensor (421) detektiert worden ist, erfasst,

wobei der Abschnitt (414) zur Anzeige der Führung der Führungsvorrichtung (410) die Positionsinformationen des Hindernisses, die durch den Abschnitt (422) zur Erfassung der Hindernisposition der Hindernisdetektionsvorrichtung (420) erfasst worden sind, zusammen mit der Zieloberfläche und den Positionsinformationen des Arbeitsgeräts (1A) auf demselben Bildschirm des Führungsmonitors (415) anzeigt.

2. Baumaschine nach Anspruch 1, wobei

der Abschnitt (414) zur Anzeige der Führung der Führungsvorrichtung (410) einen Anzeigemodus für die Zieloberfläche zu einem Anzeigemodus ändert, der sich von anderen Anzeigemodi unterscheidet, wenn die Positionsinformationen des Hindernisses, die durch den Abschnitt (422) zur Erfassung der Hindernisposition erfasst worden sind, in der Zieloberfläche, die durch den Abschnitt (413) zur Einstellung der Zieloberfläche eingestellt worden ist, oder in der Nähe der Zieloberfläche enthalten sind.

## Revendications

1. Machine de chantier incluant :

un instrument de travail articulé (1A) monté sur un corps principal (1B) de machine de chantier et ayant une pluralité d'éléments d'entraînements qui sont couplés les uns aux autres ;

une pluralité d'actionneurs hydrauliques destinés à actionner les éléments d'entraînement ; et

une pluralité de dispositifs à levier d'actionnement disposés dans une cabine occupée par un opérateur, destinés à donner instruction aux actionneurs hydrauliques de s'actionner dans des mesures respectives en dépendance d'amplitudes d'actionnement à raison desquelles les dispositifs à levier d'actionnement sont actionnés, la machine de chantier comprenant :

un appareil de guidage (410) incluant :

une section d'acquisition de données de conception (411) qui acquiert des données de conception prédéterminées concernant un objet devant faire l'objet d'un travail par l'instrument de travail (1A) ;

une section d'acquisition de position d'instrument de travail (412) qui acquiert des informations de position de l'instrument de travail (1A) ;

une section de définition de surface cible (413) qui définit une surface cible pour l'objet devant faire l'objet d'un travail par l'instrument de travail (1A) sur la base des données de conception acquises par la section d'acquisition de données de conception (411) et des informations de position de l'instrument de travail (1A) acquises par la section d'acquisition de position d'instrument de travail (412) ; et

une section d'affichage de guidage (414) qui affiche la surface cible définie par la section de définition de surface cible (413) et les informations de position de l'instrument de travail (1A) acquises par la section d'acquisition de position d'instrument de travail (412) sur un dispositif de surveillance de guidage (415) dans la cabine ;

**caractérisée en ce que** :

un appareil de détection d'obstacle (420) inclut :

un capteur d'obstacle (421) qui détecte un obstacle autour de la machine de chantier ; et

une section d'acquisition de position d'obstacle (422) qui acquiert l'information de position de l'obstacle détecté par le capteur d'obstacle (421),

dans laquelle la section d'affichage de guidage (414) de l'appareil de guidage (410) affiche les informations de position de l'obstacle acquises par la section d'acquisition de position obstacle (422) de l'appareil de détection d'obstacle (420) conjointement avec la surface cible et les informations de position de l'instrument de travail (1A) sur le même écran du dispositif de surveillance de guidage (415).

2. Machine de chantier selon la revendication 1, dans laquelle
la section d'affichage de guidage (414) de l'appareil de guidage (410) change un mode d'affichage pour la surface cible en un mode d'affichage différent d'autres modes d'affichage si les informations de position de l'obstacle acquises par la section d'acquisition de position d'obstacle (422) sont incluses dans la surface cible définie par la section de définition de surface cible (413) ou au voisinage de la surface cible.

FIG. 1

CONTROL UNIT

8a,8b,8c

12

7  4f  4e  4d  4c  4a  4b

3f  3e  3d  3c  3a  3b

5f  5e  5d  5c  5a  5b

2  6

EP 3 680 397 B1

# FIG. 2

# FIG. 3

ADMINISTRATIVE
OFFICE

DATABASE ~400

310

SETTING SECTION ~7

7a
7b

POSTURE SENSOR ~8

8a
8b
8c

SATELLITE POSITIONING SYSTEM ~301

INPUT SECTION ~91

CUP ~92

OUTPUT SECTION 95

415

ROM (RECORDING MEDIUM) 93

RAM 94

302

CAMERA

303

IC TAG RECEIVER

INPUT SECTION ~391

CUP ~392

OUTPUT SECTION 395

424

ROM (RECORDING MEDIUM) 393

RAM 394

320

# FIG. 4A

ADMINISTRATIVE OFFICE

DATABASE ～400

410

SETTING SECTION 7 →

411
DESIGN DATA ACQUISITION SECTION

413
TARGET SURFACE SETTING SECTION

414
GUIDANCE DISPLAY SECTION

415

POSTURE SENSOR 8 →

412
WORK IMPLEMENT POSITION ACQUISITION SECTION

SATELLITE POSITIONING SYSTEM 301 →

420

CAMERA 302 →

421
OBSTACLE DETECTOR

422
OBSTACLE POSITION ACQUISITION SECTION

423
OBSTACLE DISPLAY SECTION

424

IC TAG RECEIVER 303 →

EP 3 680 397 B1

# FIG. 4B

START

CALCULATE CLAW TIP POSITION WITH RESPECT TO MACHINE BODY — S451

DISPLAY CLAW TIP POSITION — S452

CALCULATE TARGET SURFACE WITH RESPECT TO MACHINE BODY — S453

DISPLAY TARGET SURFACE — S454

CALCULATE OB STACLE POSITION WITH RESPECT TO MACHINE BODY — S455

S456

OBSTACLE ?  NO (NOT PRESENT)

YES (PRESENT)

HIGHLIGHT TARGET SURFACE — S457

RETURN

# FIG. 5A

# FIG. 5B

## FIG. 6

## FIG. 7

# FIG. 8A

415

1A

1a

1B

1c

1b

600

x[m]

e d c

500

b a

500a

DETECTED NEAR TARGET SURFACE
⇒HIGHLIGHTED DISPLAY

# FIG. 8B

415

1B

1A

c

b

x[m]

a

510

510a

DETECTED NEAR TARGET SURFACE
⇒HIGHLIGHTED DISPLAY

# FIG. 9

DETECTED ON RIGHT SIDE
⇒HIGHLIGHTED DISPLAY

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001123476 A
- JP 2002339407 A
- JP 2015190159 A
- JP 2017115488 A
- US 2017175364 A1
- WO 2017110382 A1
- WO 2017094626 A1
- US 2013222573 A1